# EUROPEAN PATENT APPLICATION

(11) **EP 3 971 231 A1**
(43) Date of publication of application: **23.03.2022**
(21) Application number: 21188817.7
(22) Date of filing: 30.07.2021
(51) Int. Cl.: C08J 3/075, C08J 3/21

(54) **A METHOD OF EXECUTION AT LEAST ONE HOMOGENEOUS ELEMENT OF THERMOPLASTIC COMPOSITE MATERIAL**

(30) Priority: 18.09.2020 IT 202000022111
(71) Applicant: Avella, Maurizio, 80129 Napoli (IT); De Falco, Antonio, 80038 Pomigliano d'Arco (IT); Malinconico, Mario, 80136 Napoli (IT)
(72) Inventor: AVELLA, Maurizio, 80129 Napoli (IT); DE FALCO, Antonio, 80038 Pomigliano d'Arco (IT); MALINCONICO, Mario, 80136 Napoli (IT)
(74) Representative: Trentin, Michele

(57) **Abstract**

A method of execution of at least one homogeneous element of thermoplastic composite material comprising at least one step of preparing a plurality of recycled material fragments (2), comprising at least one plurality of polymers, and a step of inserting the plurality of recycled material fragments into the at least one container together with at least one organic solvent (3) so as to achieve the solubilization of the plurality of recycled material fragments in the organic solvent to obtain at least one emulsion. Said method (1) also including the preparation of a plurality of inert fillers (5) and the sifting thereof to obtain a set having a predetermined particle size (6) such as to improve the mechanical features of the emulsion. Furthermore, the method of execution of the invention then includes a step of cold mixing the emulsion with the set of inert fillers until said at least one homogeneous element is obtained and the removal of the organic solvent (10) from the homogeneous element.

## Description

### Field of application

The present invention is applicable to the field of making composite materials and, in particular, relates to a method and a plant for the execution of a homogeneous element of thermoplastic composite material.

### Background art

The production of thermoplastic composite materials, i.e., materials consisting of an emulsion of inert filler particles of various shapes and types, in materials comprising rigid or flexible thermoplastic polymers, plays an important role in the production of materials.

The peculiarity of such materials consists in combining the low density typical of plastics together with the resistance of inert fillers, features which facilitate the diffusion and use of such materials in sectors such as land, sea and air transport, construction, furniture and the like.

In particular, thermoplastic composite materials whose components are obtained from the waste and/or end-of-life supply chain have assumed significant centrality. Generally, the thermoplastic matrix is obtained from end-of-life expanded polystyrene or ABS and Polycarbonate packaging, while the inert filler is obtained from the nautical, aeronautical and other sectors.

In other words, the use and production of thermoplastic materials obtained from packaging in expanded polystyrene (EPS) or from the disposal of polystyrene, ABS, polycarbonate electrical and electronic waste (WEEE), mixed with fillers from the collection of end-of-life waste and/or materials of a thermosetting nature filled with glass or carbon fibres, from the transport sector (nautical, aeronautical, automotive) or from the generation of energy (wind turbines) or containers for liquids (fibreglass tanks) to obtain a composite material is currently of particular importance in the field of composite materials.

The known techniques, normally used to make plastic materials from recycled objects, are able to ensure interesting mechanical properties in the resulting material. However, they involve chemical reactions or mechanical processes with high economic and/or energy costs.

To overcome such drawbacks, in the prior art there is a process for making such homogeneous elements of thermoplastic composite material called the E.T.E. (Emulsified Thermoplastic Engineering) process. Such technology allows to produce thermoplastic materials, using waste and/or end-of-life materials, by means of a cold emulsion.

Furthermore, document WO 2009/072150 A1 is known, which describes a process and a plant for the production of thermoplastic composite materials with very high filler content, starting from materials normally disposed of in landfill or sent for incineration, or in any case for uses with low added value, by preparing a solution in at least one organic solvent to obtain a filled thermoplastic material.

However, such processes of execution of elements in thermoplastic composite material, although limiting the expense in terms of economic and energy costs, do not allow to obtain a result capable of optimizing the mechanical features such as, for example, elastic modulus and resilience of the material produced.

### Presentation of the invention

The object of the present invention is to provide a method of execution which allows to at least partially overcome the drawbacks highlighted above.

In particular, an object of the present invention is to provide a method of execution capable of making at least one homogeneous element of thermoplastic composite material.

Another object of the present invention is to provide a method of execution adapted to make the aforesaid homogeneous element using waste and/or end-of-life materials.

A further object of the present invention is to provide a method of execution of a homogeneous element of thermoplastic composite material obtained from recycled material having better mechanical features with respect to the equivalent elements present in the prior art.

Said objects, as well as others which will become clearer in the following description, are achieved by a method of execution of a homogeneous element of thermoplastic composite material in accordance with the claims which follow, which are to be considered an integral part of the present patent.

In particular, the method of execution of the invention comprises at least one step of preparing a plurality of recycled material fragments, comprising at least a plurality of polymers, subsequently introduced into at least one container together with at least one organic solvent so as to achieve the solubilization of the plurality of recycled material fragments in the organic solvent to obtain at least one emulsion.

According to another aspect of the invention, the method of execution also comprises the preparation of a plurality of inert fillers, which are then sifted to obtain a set thereof having a predetermined particle size such as to improve the mechanical features of the at least one emulsion.

Next, the method of execution includes that the at least one emulsion of the plurality of recycled material fragments in the organic solvent is cold mixed with the set of inert fillers until the at least one homogeneous element of thermoplastic composite material is obtained.

Finally, according to a further aspect of the method of execution of the invention, the organic solvent is removed from the homogeneous element.

On closer inspection, the solubilization of the plurality of fragments in organic solvent conducted to obtain an emulsion and the subsequent mixing with the set of inert fillers allows, advantageously, to make a homogeneous element of thermoplastic composite material

Still advantageously, the method of execution of the invention for making the aforesaid homogeneous element uses a plurality of fragments obtained from recycled material allowing, consequently, to limit the production costs.

Still advantageously, the use of the set of inert fillers having a predetermined particle size allows to optimize the homogenization of the element in thermoplastic composite material. Such optimization in the execution and in the homogenization allows to obtain, still advantageously, a homogeneous element of thermoplastic composite material having better mechanical features than the equivalent elements present in the prior art.

From what has been said, it is evident that the objects described are also achieved by a production plant adapted to the execution of at least one element of thermoplastic composite material according to what is described above.

According to an aspect of the invention, the production plant comprises at least one mixer shaped to contain at least a plurality of recycled material fragments comprising at least a plurality of polymers and at least one organic solvent and adapted to mix the plurality of recycled material fragments with the organic solvent so as to obtain at least one emulsion.

According to another aspect of the invention, the plant also comprises at least one sifting set for sifting at least a plurality of inert fillers so as to extract therefrom a set having a predetermined particle size.

In addition, the plant of the invention also comprises at least one mixer, for cold mixing the emulsion with the set of inert fillers having a predetermined particle size until at least one homogeneous element is achieved, and at least one device for removing the organic solvent from the homogeneous element.

### Brief description of the drawings

Further features and advantages of the invention will become more evident in light of the detailed description of a preferred but non-exclusive embodiment of a method of execution according to the invention, illustrated by way of non-limiting example with the aid of the accompanying drawings, in which FIG: 1 depicts a block diagram of the method of execution according to the invention.

### Detailed description of some preferred embodiments

With reference to the aforementioned figure, a method of execution of a homogeneous element of thermoplastic composite material according to the invention is described.

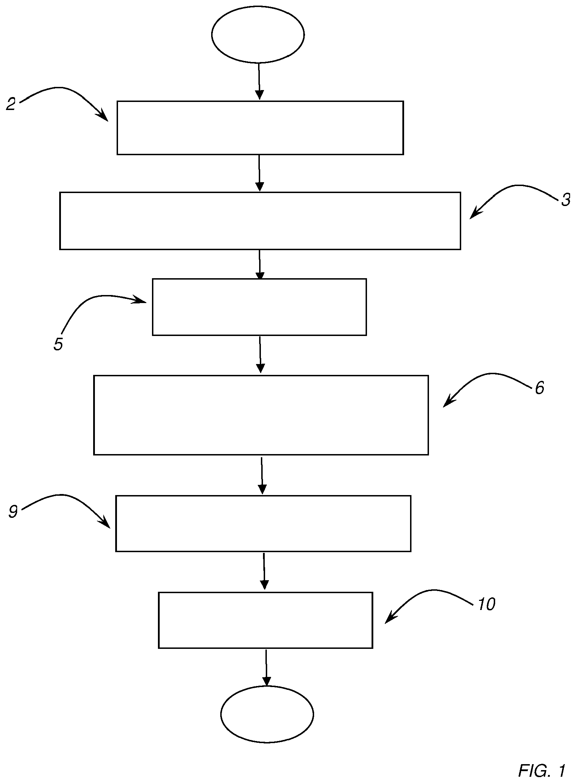

In particular, the method of execution of the invention comprises an initial step, indicated in the figure with **2,** in which a plurality of recycled material fragments comprising a plurality of polymers are arranged. Typically, but not necessarily, such recycled materials are derived from expanded polystyrene (EPS) packaging or from the disposal of electrical and electronic waste (WEEE) in polystyrene, ABS, polycarbonate and mixtures thereof.

Subsequently, the plurality of recycled material fragments is inserted into a container together with an organic solvent, step indicated in the figure with **3,** so as to achieve the solubilization of the fragments themselves to obtain an emulsion.

According to the embodiment of the invention which is described, the organic solvent comprises a gelling substance.

Advantageously, the use of a gelling substance allows to absorb the inert fillers of various kinds, trapping them without resorting to procedures which require high temperature. Obviously, the composition of the organic solvent must not be considered limiting for alternative embodiments of the invention.

Furthermore, also the number of containers and solvents used must not be considered limiting for alternative embodiments of the invention.

According to another aspect of the invention, the method of execution also comprises a step of preparing a plurality of inert fillers, indicated in the figure with **5.**

Such inert fillers comprise objects obtained from waste material and/or end-of-life thermosetting material loaded with glass or carbon fibres or wood from, for example, the transport sector (marine, aeronautical, automotive), power generation (wind turbines) or containers for liquids (fibreglass tanks) or furniture elements (chipboard, MDF, multilayer).

According to the embodiment of the invention which is described, the plurality of inert fillers comprises a mixture of CFRR (carbon fibres reinforced resins). Obviously, also such an aspect must not be considered limiting for alternative embodiments of the invention where, for example, the inert fillers comprise a mixture of GFRR (glass fibres reinforced resins), a mixture comprising both CFRR (carbon fibres reinforced resins) and GFRR (glass fibres reinforced resins) in any ratio or other types of fibres.

In addition to the aforementioned types of inert fillers, according to further embodiments of the invention, they can also comprise mixtures of WFRR (wood fibres reinforced resins), combined or not with other varieties of inert fillers.

The inert fillers are then sifted to obtain a set having a predetermined particle size, a step indicated in the figure with **6,** such as to improve the mechanical features of the emulsion. Obviously, the sifting method must not be understood in a limiting sense for the invention.

In particular, in the case in which the inert fillers comprise a mixture of CFRR (carbon fibres reinforced resins), the sifting is carried out so that the set of inert fillers comprises elements of average dimensions between 1 mm and 10 mm. Similarly, in the presence of a mixture of GFRR (glass fibres reinforced resins), the sifting is carried out so that the mixture comprises elements with an average size of less than 1 mm.

Obviously, the composition of the set of inert fillers and the dimensions of the elements must not be considered limiting for alternative embodiments of the invention where, for example, the inert fillers comprise a mixture having both CFRR (carbon fibres reinforced resins) and GFRR (glass fibres reinforced resins) comprising elements of any size.

According to a further aspect of the invention, the method of execution then comprises a step, indicated in the figure with **9,** of cold mixing the emulsion with the set, having a predetermined particle size, of inert fillers until a homogeneous element is obtained. Typically, but not necessarily, said homogeneous element comprises a content by weight of the set of inert fillers between 30% and 80% of the weight of the homogeneous element itself.

According to another aspect of the invention, the method also comprises a step of removing the organic solvent from the homogeneous element, indicated in the figure with **10.**

According to the embodiment which is described, the removal of the organic solvent **10** comprises the evaporation thereof. Obviously, such an aspect must not be considered limiting for alternative embodiments of the invention where, for example, the organic solvent is removed by coagulation in water.

Advantageously, the method of execution of the invention allows to obtain thermoplastic matrix materials with high fibre content and/or particulate (inert) fillers with high mechanical properties.

Still advantageously, the method of the invention allows to make a homogeneous element of thermoplastic composite material which can be processed in machines normally used, for example, for injection moulding, compression and thermoforming.

Furthermore, the use of recycled, waste and/or end-of-life materials allows to limit production costs, still advantageously reducing economic/energy costs with respect to the equivalent methodologies present in the prior art.

In fact, the final homogeneous element is an emulsion of mainly fibrous fillers in the solubilized polymer matrix and is therefore provided with a uniform structure since the fillers are, still advantageously, uniformly distributed in the thermoplastic due to the use of a predetermined particle size thereof. This differentiates the result of the method of the invention from the already known high filler products, where the fillers are irregularly distributed.

Still advantageously, the use of a predetermined particle size of inert fillers allows to disperse the high amount of filler evenly in the polymeric base (emulsion) so as to obtain a homogeneous element at a micro and macroscopic level.

Consequently, the better uniformity and homogeneity of the homogeneous element obtained with the method of the invention allows to obtain, still advantageously, a homogeneous element of thermoplastic composite material having better mechanical features with respect to the equivalent elements present in the prior art.

In addition, still advantageously, the method of the invention allows to obtain high-quality aesthetic effects, which allows the products obtained from the thermoplastic composite material to be proposed in sectors such as, for example, indoor construction, furniture, objects.

According to an embodiment of the invention, not shown in the figure, the method also comprises a step of adding additives constituting further components of the plurality of inert filler.

Advantageously, the addition of additives to the inert filler allows to further improve the mechanical features of the material obtained.

Furthermore, according to other embodiments, also not shown in the figure, such additives also comprise pigments adapted to improve the aesthetic properties of the composite material itself and/or the resistance to flame propagation.

According to other embodiment of the method of the invention, it also comprises an optimized cutting step of the homogeneous element to adapt the shape thereof to any particular process machines. Obviously, such an aspect must also not be considered limiting for further alternative embodiments of the invention where, for example, the homogeneous element of thermoplastic composite material has an irregular shape.

Furthermore, according to further embodiments, the method of the invention may also comprise a drying step and a drawing step.

Advantageously, such additional steps allow the material to be shaped to conform to subsequent processing. Obviously, such aspects are not limiting for any alternative embodiments of the invention.

From the above, it is evident that the object of the invention is also a production plant, not shown in the figure, adapted to the execution of at least one element of thermoplastic composite material according to what has been described so far.

In particular, it comprises a mixer shaped to contain a plurality of recycled material fragments, containing a plurality of polymers, and an organic solvent. Such a mixer is further adapted to mix said plurality of fragments together with the organic solvent so as to obtain at least one emulsion.

Typically, but not necessarily, the mixer comprises a silo with vertical mixing auger provided with an aspiration system for the recovery of fumes.

According to another aspect of the invention, the plant then comprises a sifting set for sifting a plurality of inert fillers so as to extract a set thereof having a predetermined particle size.

Furthermore, the production plant of the invention also comprises a mixer for cold mixing the emulsion with the set of inert fillers, having a predetermined particle size, until a homogeneous element is achieved.

According to a further aspect of the invention, the plant also comprises a device for removing the organic solvent from the aforesaid homogeneous element.

A complete description of the plant of the invention is omitted here, since it would replicate what is already written about the same during the description of the method of execution. What is observed is that it achieves all the aforementioned advantages.

In light of the foregoing, it is understood that the method of execution of the invention achieves all the intended objects.

In particular, the method of execution allows to make a homogeneous element of thermoplastic composite material.

Furthermore, the method of the invention allows to obtain such a material using waste and/or end-of-life materials.

In addition, the method of execution of the invention allows to produce a homogeneous element of thermoplastic composite material obtained from recycled material having better mechanical features than the equivalent elements present in the prior art.

The invention might be subject to many changes and variants, which are all included in the appended claims. Moreover, all the details and steps may furthermore be replaced by other technically equivalent elements, and the materials may be different depending on needs, without departing from the protection scope of the invention defined by the appended claims.

## Claims

1. A method of execution of at least one homogeneous element of thermoplastic composite material comprising at least the following steps:
- preparing a plurality of recycled material fragments (**2**) comprising at least one plurality of polymers;
- inserting said plurality of recycled material fragments into at least one container together with at least one organic solvent (**3**) so as to achieve the solubilization of said plurality of recycled material fragments in said organic solvent to obtain at least one emulsion;
- preparing a plurality of inert fillers (**5**);
- sifting said plurality of inert fillers to obtain a set of said inert fillers having a predetermined particle size (**6**) such as to improve the mechanical features of said at least one emulsion;
- cold mixing said at least one emulsion of said plurality of recycled material fragments in said organic solvent with said set of said inert fillers having a predetermined particle size (**9**) until said at least one homogeneous element is obtained;
- removing said at least one organic solvent (**10**) from said at least one homogeneous element.

2. Method of execution according to claim 1, **wherein** said plurality of inert fillers comprises at least one mixture of CFRR (carbon fibres reinforced resins).

3. Method of execution according to claim 1 or 2, **wherein** said plurality of inert fillers comprise at least one mixture of GFRR (glass fibres reinforced resins).

4. Method of execution according to one or more of the preceding claims, **wherein** said homogeneous element comprises a content by weight of said set of inert fillers between 30% and 80% of the weight of said at least one homogeneous element.

5. Method of execution according to one or more of the preceding claims, **wherein** said set of said inert fillers comprising said mixture of CFRR (carbon fibres reinforced resins) comprises elements of CFRR (carbon fibres reinforced resins) of average dimensions between 1 mm and 10 mm.

6. Method of execution according to one or more of the preceding claims, **wherein** said set of said inert fillers comprising said mixture of GFRR (glass fibres reinforced resins) comprises elements of GFRR (glass fibres reinforced resins) of average dimensions less than 1 mm.

7. Method of execution according to one or more of the preceding claims, **wherein** said plurality of inert fillers comprises objects obtained from waste material and/or end-of-life material.

8. Method of execution according to one or more of the preceding claims, **wherein** said at least one organic solvent comprises a gelling substance.

9. Method of execution according to one or more of the preceding claims, **wherein** said step of removing (**10**) said at least one organic solvent from said at least one homogeneous element comprises evaporating said at least one organic solvent.

10. A production plant adapted to the execution of at least one element of thermoplastic composite material according to one or more of the preceding claims and comprising:
- at least one mixer shaped to contain at least a plurality of recycled material fragments comprising at least a plurality of polymers and at least one organic solvent and adapted to mix said at least one plurality of recycled material fragments with said at least one organic solvent so as to obtain at least one emulsion;
- at least one sifting set for sifting at least a plurality of inert fillers so as to extract a set of said inert fillers having a predetermined particle size;
- at least one mixer for cold mixing said at least one emulsion with said set of inert fillers having a predetermined particle size until at least one homogeneous element is achieved;
- at least one device for the removal of said organic solvent from said homogeneous element.
